Europäisches Patentamt

(19) European Patent Office

Office européen des brevets

(11) Publication number: **0 229 421**
**B1**

(12) EUROPEAN PATENT SPECIFICATION

(45) Date of publication of the patent specification:
14.03.90

(51) Int. Cl.⁴: **C01F 5/38, C05C 1/02**

(21) Application number: **86202261.3**

(22) Date of filing: **12.12.86**

(54) A process for the production of a magnesium nitrate containing solution suitable for use in making thermally stable ammonium nitrate containing fertilizers.

(30) Priority: **13.12.85 NL 8503443**

(43) Date of publication of application:
**22.07.87 Bulletin 87/30**

(45) Publication of the grant of the patent:
**14.03.90 Bulletin 90/11**

(84) Designated Contracting States:
**AT BE DE ES FR GB GR IT NL SE**

(56) References cited:
**EP-A- 0 075 354**
**EP-A- 0 107 870**
**US-A- 1 910 807**
**US-A- 3 173 756**

(73) Proprietor: **Hydro Agri Sluiskil B.V., Industrieweg 10, NL-4541 HJ Sluiskil(NL)**

(72) Inventor: **Van Hijfte, Willy Henri Prudent, Trieststraat 24, Assenede(BE)**
Inventor: **Vanmarcke, Luc Albert, Gravin d'Alcantaralaan 25, Lembeke(BE)**

(74) Representative: **Smulders, Theodorus A.H.J., Ir. et al, Vereenigde Octrooibureaux Nieuwe Parklaan 107, NL-2587 BP 's-Gravenhage(NL)**

ACTORUM AG

## Description

This invention relates to a process for the production of a magnesium nitrate containing solution suitable for use in making thermally stable ammonium nitrate containing fertilizer granules, from magnesium oxide and aqueous nitric acid.

It is known that magnesium nitrate can be prepared by reacting magnesium oxide with nitric acid. This reaction can be carried-out on an industrial scale by adding finely-divided magnesium oxide and aqueous nitric acid in a desired ratio to a vigorously stirred aqueous magnesium nitrate solution and dissipating the reaction heat generated. In practice, however, this method turns out to be unsuitable, because the powdered magnesium oxide is difficult to disperse in the magnesium nitrate solution, and consequently is partially not reacted or at a low rate only, as a result of which efficiency is unsatisfactory. Moreover, a portion of the magnesium oxide is hydrated to form very hard, magnesium hydroxide containing lumps, which do not take part in the reaction and are a great nuisance in the rest of the process.

It has now been found that the preparation of magnesium nitrate by reacting finely-ground magnesium oxide with nitric acid can be carried out without any problems by using as the reaction medium an aqueous solution containing ammonium nitrate and magnesium nitrate within a specific range of weight ratios.

The process according to the present invention is characterized by adding, in a reaction vessel, to an aqueous solution containing ammonium nitrate and magnesium nitrate and having a temperature of between 70° and 120°C and an ammonium nitrate/magnesium nitrate weight ratio of between 75/25 and 25/75, finely-ground magnesium oxide and such a proportion of aqueous 50-65 wt % nitric acid that the pH of the mixture is 1.0-4.8, with vigorous stirring and while maintaining the temperature of the mixture between 70° and 120° by dissipating the heat generated during the reaction of the magnesium oxide with nitric acid, removing a portion of the reaction mixture from the reaction vessel and recovering it as a product, and maintaining the ammonium nitrate/magnesium nitrate weight ratio in the reaction mixture remaining behind in the reaction vessel between 75/25 and 25/75 by adding an aqueous ammonium nitrate solution.

It has been found that the problems caused by the poor dispersibility of finely-divided magnesium oxide in an aqueous magnesium nitrate solution are removed if ammonium nitrate is added to the solution. Magnesium oxide is readily dispersible in an aqueous solution which contains ammonium nitrate and magnesium nitrate, as a consequence of which the reaction with nitric acid is promoted considerably. In addition, the presence of ammonium nitrate leads to a decrease of the crystallization point and an increase of the boiling point of the solution. A solution consisting of 37 wt % ammonium nitrate, 37 wt % magnesium nitrate and 26 wt % water has a crystallization point of about 30°C and a boiling point of about 170°C. Owing to the decreased crystallization point and the increased boiling point of the solution, the reaction of magnesium oxide with nitric acid can be carried out at relatively low temperatures, at which no water vapour is generated, and no danger of crystallization exists. If the reaction is carried out at higher temperatures at which water vapour is generated, it is virtually impossible to prevent the magnesium oxide supplied to the reaction vessel from contacting the water vapour, as a result of which it is partially hydrated to form the hard magnesium hydroxide containing lumps referred to hereinbefore. In addition, the water vapour has to be discharged and condensed. The condensate is then contaminated with magnesium oxide, magnesium nitrate and ammonium nitrate, so that is cannot be discharged as it is without causing environmental problems. These effects do not occur if the temperature of the reaction mixture is maintained between 70° and 120°C.

The reaction of magnesium oxide with nitric acid is preferably carried out at temperatures between 75° and 85°C in an aqueous solution containing ammonium nitrate and magnesium nitrate in a weight ratio of between 65/35 and 55/45.

The magnesium oxide used for the process according to the present invention may contain the usual contaminations which occur, for example, in magnesite (magnesium carbonate ore).

As the second reaction component, aqueous nitric acid with an $HNO_3$ concentration of 50-65% by weight, preferably of 52-60% by weight, is added to the reaction mixture in such a proportion that the pH of the mixture is maintained between 1.0 and 4.8. At a pH of less than 1, colloidal gelatinous precipitates are formed, which are difficult to remove, and at a pH of more than 4.8, the quantity of non-converted magnesium oxide may increase to such an extent as to cause a fast increase in viscosity of the mixture. To fully exclude the occurrence of these undesirable effects, the pH of the mixture is preferably maintained between 1.5 and 3.0.

The mixture should be vigorously stirred to prevent that, locally, high temperatures occur, which promote the hydration of magnesium oxide and the formation of the hard lumps referred to hereinbefore. Furthermore the temperature of the mixture should be maintained at the desired level, by dissipating the heat generated during the exothermic reaction between magnesium oxide and nitric acid (approximately 3660 kJ per kg MgO). This can be effected in any suitable manner, for example, by circulating the reaction mixture through a cooling device.

A portion of the reaction mixture is recovered as a product, and can be transferred to a storage vessel. In the remaining part of the mixture, which remains behind in the reaction vessel, the weight ratio of ammonium nitrate/magnesium nitrate is maintained at the desired value by adding the required amount of aqueous ammonium nitrate solution with an $NH_4NO_3$ concentration of preferably 90-95% by weight.

The product in the storage vessel is preferably stirred to prevent that any solid siliceous particles from the magnesium oxide used as the raw material, which may be present, settle to the bottom. During storage, the pH of the product is preferably maintained between 2.5 and 3.5, if necessary by adding $NH_3$. The pH of the product can best be measured in a circulation duct.

The reaction can be automatically monitored and controlled at various points. Thus the coolant circulation in the cooling device can be automatically adjusted to the temperature of the circulating reaction mixture, and the supply of $HNO_3$ can be adapted automatically to the pH of the cooled reaction mixture. In the storage vessel, the pH can be adjusted automatically by the addition of $NH_3$, if the pH measured in the circulation duct gives rise thereto. The most favourable conditions for such automatic monitoring and control are a reaction temperature of 75°-90°C and a weight ratio of ammonium nitrate/magnesium nitrate of between 65/35 and 55/45, an $HNO_3$ concentration of the nitric acid between 52 and 60% by weight, a pH of the reaction mixture between 1.5 and 3.0, and an $NH_4NO_3$ concentration of the ammonium nitrate solution of 90-95% by weight.

The product produced by the process according to this invention is very suitable for use in making thermally stabilized ammonium nitrate containing fertilizer granules, either by prilling, pan granulation or drum granulation of a substantially anhydrous ammonium nitrate melt, or by the granulation of an aqueous, ammonium nitrate containing solution, as described in Netherlands patent 173,387. The product of the process according to this invention can be added to the product of the ammonium nitrate production prior to the last evaporation phase, without any preceding filtration.

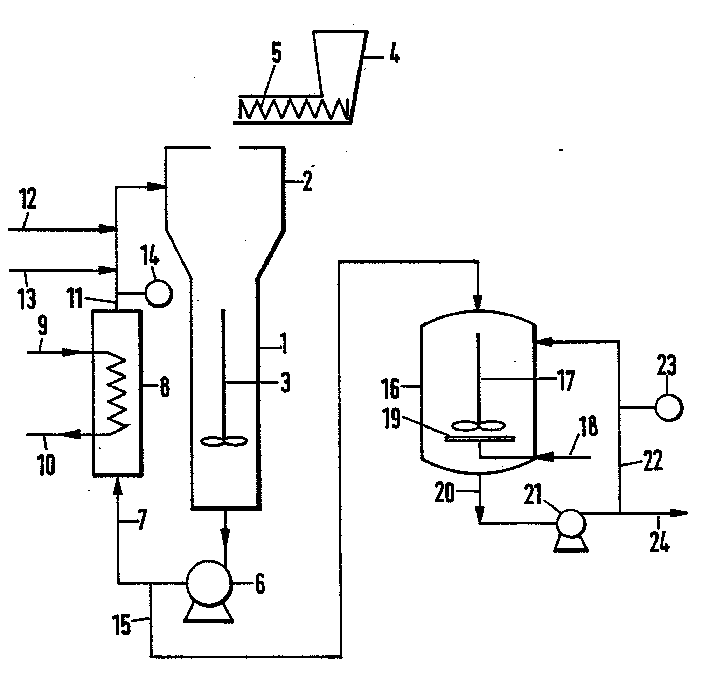

The invention will now be described with reference to the accompanying drawing, which diagramatically illustrates one embodiment of the process according to the invention.

The drawing shows a cylindrical reactor 1 which at the top, via a conical flare passes into a cylindrical portion 2 of larger diameter, which can function as a mixing cyclone. The reactor 1 is provided with a stirrer 3, shown diagramically. Arranged above the mixing cyclone 2 is a supply vessel 4 for finely-divided magnesium oxide, which can be dosed into the mixing cyclone 2 by means of a screw conveyor 5. From the bottom of reactor 1, reaction mixture is removed and recycled, via a pump 6, conduit 7, cooling device 8 and conduit 11 to mixing cyclone 2. Cooling device 8 is provided with coolant supply and discharge conduit 9 and 10. Into conduit 11 aqueous nitric acid is supplied through conduit 12 and aqueous ammonium nitrate solution through conduit 13. The mixture formed is supplied tangentially to mixing cyclone 2 at a high velocity, so that the various components enter reactor 1 as an intimate mixture.

The pH of the cooled reaction mixture is measured after the mixture has left cooling device 8, by means of a measuring device 14, the pH being maintained at a constant value by controlling the nitric acid supply through conduit 12.

The volume in reactor 1 is kept constant by recovering a portion of the reaction mixture as a product through conduit 15. The product is transferred to a storage vessel 16, which is provided with a stirrer 17, shown diagramatically, and kept in circulation through conduit 20, pump 21 and conduit 22, the pH being measured by means of a measuring device 23. Depending on the value measured, a pH correction can be performed, if necessary, by adding $NH_3$ to the storage vessel through conduit 18 and distributor 19. As desired, a portion of the product may be discharged through conduit 24 for use elsewhere.

Example

In a stirred test reactor, in a number of continuously performed tests, magnesium nitrate was prepared by reacting magnesium oxide with aqueous nitric acid. The duration of the tests was about 4 hours.

In the first test, no ammonium nitrate solution was used. The other tests were carried out in accordance with the present invention.

At the beginning of the first test, the reactor was filled with a 50 wt % magnesium nitrate solution. In the other tests, the first reactor charge consisted of 36 wt % $NH_4NO_3$, 36 wt % $Mg(NO_3)_2$, 26 wt % $H_2O$ and 2 wt % inert material.

To the reactor charge were added:
- 92 wt % aqueous $NH_4NO_3$ solution with a temperature of 120°C
- 60 wt % aqueous $HNO_3$ of ambient temperature
- finely-ground magnesium oxide.

After an equilibrium had been reached in the reactor, which was the case after about 2 hours, samples were taken periodically and analyzed for $NH_4NO_3$, $Mg(NO_3)_2$ and percent of MgO conversion, defined as

$$\% \text{ MgO conversion} = \frac{\text{weight MgO, bonded in } Mg(NO_3)_2}{\text{weight of supplied pure MgO}} \times 100$$

The test conditions and the average composition of the resulting solutions are set forth in the following table.

These results show that, without the use of ammonium nitrate (Test 1) the MgO conversion is relatively poor, which must be attributed to the formation of many small, magnesium hydroxide containing agglomerates, which do not react with nitric acid or hardly so. In the tests according to the invention (Tests 2-11), on the other hand, owing to the excellent dispersibility of the MgO in the ammonium nitrate containing reaction mixture and the absence of water vapour generation, no agglomerates were formed at all, and high MgO conversions of generally more than 95% and in some cases even of 98% and higher were attained.

When the process according to the invention is carried out on an industrial scale, MgO conversions of more than 98% and often even more than 99% are obtained without any problems, as evidenced by the results of Test 12, set forth in the table.

Table

| Test | | 1 | 2 | 3 | 4 | 5 | 6 | 7 | 8 | 9 | 10 | 11 | 12 |
|---|---|---|---|---|---|---|---|---|---|---|---|---|---|
| Conditions | | | | | | | | | | | | | |
| – continuous addition of | | | | | | | | | | | | | |
| – MgO | kg/h | 3.0 | 3.0 | 3.0 | 2.9 | 3.4 | 3.0 | 2.9 | 2.9 | 3.0 | 5.0 | 5.0 | 3.0 |
| – aqueous $NH_4NO_3$ (92 wt.%) | kg/h | – | 25 | 16 | 9.5 | 16 | 14 | 16 | 16 | 16 | 26 | 26 | 10.3 |
| – aqueous $HNO_3$ (60 wt.%) | kg/h | 10 | 13.0 | 13.5 | 12.5 | 14.0 | 13.5 | 12.5 | 12.5 | 13.5 | 21.5 | 22.0 | 14.4 |
| – residence time | min. | 40 | 40 | 40 | 40 | 40 | 40 | 40 | 40 | 20 | 20 | 10 | 40 |
| – reaction temperature | °C | 95 | 95 | 96 | 96 | 80 | 80 | 80 | 80 | 80 | 80 | 80 | 90 |
| – pH at reaction temperature | | | 4.5 | 4.7 | 4.4 | 4.4 | 4.4 | 1.6 | 2.1 | 2.4 | 2.2 | 2.3 | 2.0 | 2.0 |
| Average composition of the resulting solution | | | | | | | | | | | | | |
| – Mg $(NO_3)_2$ | wt.% | 44.8 | 20.4 | 25.5 | 35.0 | 28.8 | 30.7 | 24.2 | 24.1 | 28.2 | 27.6 | 27.4 | 38.2 |
| – $NH_4NO_3$ | wt.% | – | 59.0 | 47.8 | 37.1 | 43.4 | 42.8 | 49.0 | 50.0 | 44.5 | 46.7 | 48.2 | 36.6 |
| – $H_2O$ | wt.% | 48.4 | 19.4 | 25.2 | 26.0 | 25.9 | 25.0 | 25.4 | 24.4 | 25.7 | 24.1 | 22.9 | 23.7 |
| – insoluble material | wt.% | 6.8 | 1.2 | 1.5 | 1.9 | 1.9 | 1.5 | 1.4 | 1.5 | 1.6 | 1.6 | 1.5 | 1.5 |
| MgO conversion | % | 75 | 96.0 | 95.1 | 96.6 | 93.5 | 98.3 | 97.9 | 94.8 | 95.7 | 95.6 | 96.8 | 99.2 |
| Particulars | | | | | | | | | | | | | |
| agglomerate formation | | many | none | none | none | none | none | none | none | none | none | none | none |
| gel formation | | none | none | none | none | none | none | none | none | none | none | none | none |

EP 0 229 421 B1

## Claims

1. A process for the production of a magnesium nitrate containing solution suitable for use in making thermally stable ammonium nitrate containing fertilizer granules, from magnesium oxide and aqueous nitric acid, characterized by adding, in a reaction vessel, to an aqueous solution containing ammonium nitrate and magnesium nitrate and having a temperature of between 70° and 120°C and an ammonium nitrate/magnesium nitrate weight ratio of between 75/25 and 25/75, finely-ground magnesium oxide and such a proportion of aqueous 50-65 wt % nitric acid that the pH of the mixture is 1.0-4.8, with vigorous stirring and while maintaining the temperature of the mixture between 70° and 120° by dissipating the heat generated during the reaction of the magnesium oxide with nitric acid, removing a portion of the reaction mixture from the reaction vessel and recovering it as a product, and maintaining the ammonium nitrate/magnesium nitrate weight ratio in the reaction mixture remaining behind in the reaction vessel between 75/25 and 25/75 by adding an aqueous ammonium nitrate solution.

2. A process as claimed in claim 1, characterized in that the reaction is carried out at 75°-90°C and with a weight ratio of ammonium nitrate to magnesium nitrate of between 65/35 and 55/45.

3. A process as claimed in claims 1-2, characterized by using aqueous 52-60 wt % $HNO_3$.

4. A process as claimed in claims 1-3, characterized in that the aqueous $HNO_3$ is added to the reaction mixture in such a proportion as to maintain the pH of the mixture between 1.5 and 3.0.

5. A process as claimed in claims 1-4, characterized in that the aqueous ammonium nitrate solution added to the reaction mixture contains 90-95% by weight of ammonium nitrate.

6. A process as claimed in claims 1-5, characterized in that the mixture recovered as a product is kept in a storage vessel with stirring and with control of the pH between 2.5 and 3.5.

7. A process for the preparation of thermally stable ammonium nitrate containing fertiliser granules which comprises effecting the process of any of the claims 1–6, adding the product thus obtained to the product of an ammonium nitrate production and subjecting the mixture thus obtained to a granulation step.

## Patentansprüche

1. Verfahren zur Herstellung einer Magnesiumnitrat enthaltenden Lösung zur Verwendung bei der Erzeugung von wärmebeständigen Ammoniumnitrat enthaltenden Düngerkörnern aus Magnesiumoxyd und wäßriger Salpetersäure, dadurch gekennzeichnet, daß ein feingemahlenes Magnesiumoxyd und eine solche Menge an wäßriger 50 bis 65 gew.%iger Salpetersäure, daß das pH des Gemisches 1,0 bis 4,8 ist, in einem Reaktionsgefäß zu einer Ammoniumnitrat und Magnesiumnitrat enthaltenden wäßrigen Lösung mit einer Temperatur zwischen 70° und 120°C und einem Gewichtsverhältnis von Ammoniumnitrat zu Magnesiumnitrat zwischen 75:25 und 25:75 gegeben werden, wobei kräftig gerührt wird, und wobei die Temperatur des Gemisches durch Ableiten der während der Reaktion des Magnesiumoxyds mit Salpetersäure erzeugten Wärme zwischen 70° und 120°C aufrechterhalten wird, ein Teil des Reaktionsgemisches aus dem Reaktionsgefäß entfernt und als Produkt zurückgewonnen wird, und das Gewichtsverhältnis von Ammoniumnitrat zu Magnesiumnitrat in dem im Reaktionsgefäß zurückbleibenden Reaktionsgemisch durch Zugabe einer wäßrigen Ammoniumnitratlösung zwischen 75:25 und 25:75 aufrechterhalten wird.

2. Verfahren nach Anspruch 1, dadurch gekennzeichnet, daß die Reaktion bei 75° bis 90°C und mit einem Gewichtsverhältnis von Ammoniumnitrat zu Magnesiumnitrat zwischen 65:35 und 55:45 durchgeführt wird.

3. Verfahren nach Ansprüchen 1 und 2, dadurch gekennzeichnet, daß wäßriges 52 bis 60 gew.-%iges $HNO_3$ verwendet wird.

4. Verfahren nach Ansprüchen 1 bis 3, dadurch gekennzeichnet, daß das wäßrige $HNO_3$ in einem solchen Verhältnis zum Reaktionsgemisch gegeben wird, daß das pH des Gemisches zwischen 1,5 und 3,0 aufrechterhalten wird.

5. Verfahren nach Ansprüchen 1 bis 4, dadurch gekennzeichnet, daß die zum Reaktionsgemisch gegebene wäßrige Ammoniumnitratlösung 90 bis 95 gew.-%iges Ammoniumnitrat enthält.

6. Verfahren nach Ansprüchen 1 bis 5, dadurch gekennzeichnet, daß das als Produkt zurückgewonnene Gemisch unter Rühren und Einstellen des pH zwischen 2,5 und 3,5 in einem Standgefäß aufbewahrt wird.

7. Verfahren zur Herstellung von wärmebeständigen Ammoniumnitrat enthaltenden Düngerkörnern unter Durchführung des Verfahrens nach einem der Ansprüche 1 bis 6, wobei das so erhaltene Produkt zum Produkt einer Ammoniumnitraterzeugung gegeben wird und das so erhaltene Gemisch einer Granulierstufe unterworfen wird.

## Revendications

1. Un procédé de production d'une solution contenant du nitrate de magnésium utilisée dans la fabrication de granules fertilisants thermalement stables contenant du nitrate d'ammonium à partir de l'oxyde de magnésium et de l'acide azotique aqueux, caractérisé par l'addition, dans un récipient de réaction, à une solution aqueuse contenant du nitrate d'ammonium et du nitrate de magnésium et ayant une température comprise entre 70°C et 120°C et un rapport en poids de nitrate d'ammonium/nitrate de magnésium compris entre 75/25 et 25/75 de l'oxyde de magnésium moulu finement et une telle proportion d'acide azotique aqueux de 50–65% en poids que le pH du mélange est 1.0–4.8, avec agitation vigoureuse, en maintenant la température du mélange entre 70°C et 120°C, par dissipation de la chaleur produite lors de la réaction de l'oxyde de magnésium avec l'acide azotique, en enlevant une portion du mélange de réaction du récipient de réaction et en la récupérant comme un produit, et en maintenant le rapport en poids du nitrate d'ammonium/nitrate de magnésium dans le mélange de réaction restant dans le recipient de réaction entre 75/25 et 25/75 par addition d'une solution aqueuse de nitrate d'ammonium.

2. Un procédé selon la revendication 1, caractérisé en ce que la réaction est effectuée à 75°C–90°C et avec un rapport en poids de nitrate d'ammonium/nitrate de magnésium compris entre 65/35 et 55/45.

3. Un procédé selon les revendications 1–2, caractérisé par l'emploi de HNO$_3$ aqueux de 52-60% en poids.

4. Un procédé selon les revendications 1–3, caractérisé en ce que le HNO$_3$ aqueux est ajouté au mélange de réaction dans une telle proportion que le pH du mélange est maintenu entre 1.5 et 3.0.

5. Un procédé selon les revendications 1–4, caractérisé en ce que la solution aqueuse de nitrate d'ammonium ajoutée au mélange de réaction contient 90–95% en poids de nitrate d'ammonium.

6. Un procédé selon les revendications 1–5, caractérisé en ce que le mélange récupéré comme un produit est maintenu dans un récipient de stockage avec agitation et avec réglage du pH entre 2.5 et 3.5.

7. Un procédé de préparation de granules fertilisants thermalement stables contenant du nitrate d'ammonium, comprenant l'exécution du procédé selon l'une quelconque des revendications 1–6, ajoutant le produit ainsi obtenu au produit d'une production de nitrate d'ammonium et soumettant le mélange ainsi obtenu à une phase de granulation.